# EUROPÄISCHE PATENTSCHRIFT

(11) **EP 1 654 337 B1**
(45) Veröffentlichungstag und Bekanntmachung des Hinweises auf die Patenterteilung: **24.01.2007**
(21) Anmeldenummer: 04763347.4
(22) Anmeldetag: 20.07.2004
(51) Int. Cl.: C09K 8/04, C09K 8/32

(54) **BOHRLOCHBEHANDLUNGSMITTEL, ENTHALTEND ETHERCARBONSÄUREN**
BOREHOLE TREATING SUBSTANCE CONTAINING ETHER CARBOXYLIC ACIDS
AGENT DE TRAITEMENT DE TROUS DE SONDAGE CONTENANT DES ACIDES CARBOXYLIQUES D'ETHER

(30) Priorität: 29.07.2003 DE 10334441
(43) Veröffentlichungstag der Anmeldung: 10.05.2006
(73) Patentinhaber: Cognis IP Management GmbH, 40589 Düsseldorf (DE)
(72) Erfinder: MÜLLER, Heinz, 40789 Monheim (DE); HERZOG, Nadja, 41352 Korschenbroich (DE); BEHLER, Ansgar, 46240 Bottrop (DE); HARTMANN, Jens, 40597 Düsseldorf (DE)
(86) Internationale Anmeldenummer: PCT/EP2004/008089
(87) Internationale Veröffentlichungsnummer: WO 2005/012455

(56) Entgegenhaltungen:
- EP-A- 0 948 577
- EP-A- 1 061 064
- WO-A-99/04138
- DATABASE WPI Section Ch, Week 199954 Derwent Publications Ltd., London, GB; Class A25, AN 1999-631902 XP002308760 & RO 114 973 B (PETROM RA ICPT) 30. September 1999 (1999-09-30)

## Beschreibung

Die vorliegende Anmeldung betrifft Additive für Bohrlochbehandlungsmittel, insbesondere Emulgatoren für wässerige Emulsionsbohrspülungen, sowie Bohrspülsysteme, die derartige Emulgatoren enthalten.

Flüssige Spülsysteme zur Niederbringung von Gesteinsbohrungen unter Aufbringung des abgelösten Bohrkleins sind bekanntlich beschränkt eingedickt fließfähige Systeme auf Wasser- oder auf Ölbasis. Die zuletzt genannten Systeme auf Ölbasis finden in der Praxis zunehmend Bedeutung und werden insbesondere im Bereich der Off-Shore-Bohrung eingesetzt. Bohrspülungen auf Ölbasis werden im allgemeinen als sogenannte Invert-Emulsionsschlämme eingesetzt, die aus einem 3-Phasen-System bestehen: Öl, Wasser und feinteilige Feststoffe. Es handelt sich dabei um Zubereitungen vom Typ der W/O-Emulsionen, d.h. die wässrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorensysteme, Beschwerungsmittel, fluid-loss-Additive, Viskositätsregler sowie ggf. eine Alkalireserve. Zu Einzelheiten wird beispielsweise verwiesen auf die Veröffentlichung P.A. Boyd at al. "New base oil used in low toxicity oil muds"; Journal of Petroleum Technology, 1985, 137-142.

Wesentliches Kriterium für die Beurteilung der praktischen Anwendbarkeit derartiger Invert-Bohrspülsysteme sind die rheologischen Kenndaten. In für die Praxis geeigneten Bohrspülsystemen müssen bestimmte Viskositätswerte eingehalten werden, insbesondere muss eine ungesteuerte Verdickung und damit Viskositätserhöhung der Bohrspülung unbedingt verhindert werden, da ansonsten das Bohrgestänge während des Bohrprozesses feststecken kann (sogenanntes "Stuck-Pipe" vergl. Manual of Drilling Fluids Technology, NL Baroid/NL Inc. 1985, Chapter "Stuck Pipe") und ein derartiger Betriebszustand nur durch zeit- und kostenaufwendige Maßnahmen behoben werden kann. In der Praxis werden daher den Bohrspülsystemen vor und während der Bohrung geeignete Verdünner zugesetzt. Im Stand der Technik sind hier vorzugsweise anionische Tenside aus der Gruppe der Fettalkoholsulfate, der Fettalkoholethersulfate und der Alkylbenzolsulfonate bekannt. Es hat sich jedoch im praktischen Einsatz gezeigt, dass derartige Verbindungen zwar die Rheologie der Bohrspülungen wirksam beeinflussen können, es wurde aber festgestellt, dass bei Einsatz von Bohrspülungen bei niedrigen Außentemperaturen, Probleme mit den aus dem Stand der Technik bekannten Verdünnern auftreten können. Dies betrifft insbesondere den Temperaturbereich von 50 °F (10 °C) und kälter. Hier kommt es trotz Verwendung der bekannten Verdünner immer wieder zu einem Viskositätsanstieg, der dann nur schwer oder gar nicht kontrolliert werden kann.

Des Weiteren muss beachtet werden, dass die Bohrspülung, die ins Erdreich gepumpt wird, sich natürlich entsprechend aufwärmt, abhängig von der Täufe z.B. auf Werte von 150 bis 250 °F (66 bzw. 121 °C), bei sehr tiefen Bohrungen bis 350 °F (178 °C), wobei es aber nicht immer gewünscht ist, dass die Rheologie im hohen Temperaturbereich ebenfalls beeinflusst wird. Vielmehr ist häufig nur eine selektive Beeinflussung der Rheologie im kritischen niedrigen Temperaturbereich gewünscht.

Außerdem sollten alle Additive und Hilfsmittel, die in Bohrspülsystemen off-shore und onshore zum Einsatz kommen hohen Anforderungen in Bezug auf die biologische Abbaubarkeit sowie die Toxizität erfüllen. Auch stellen die Umgebungsbedingungen bei Erdreicherbohrungen, wie hohe Temperatur, hoher Druck, durch Einbruch sauer Gase erfolgende pH-Wert-Änderungen etc. hohe Anforderungen an die Auswahl möglicher Komponenten und Additive.

Sofern, wie heute häufig eingesetzt, wässerige Bohrspülsysteme in Emulsionsform Verwendung finden, ist die Mitverwendung von Emulgatoren zwingend. Dem Fachmann sind eine Vielzahl geeigneter Verbindungen bekannt, wie beispielsweise der Offenbarung der EP 0 948 577 zu entnehmen ist, deren technische Lehre auf spezielle, temperaturabhängige Emulsionen eingeschränkt ist. Allerdings sind der Schrift eine Vielzahl dem Fachmann für den Einsatz in Bohrspülungen geeignete Emulgatoren zu entnehmen. Verwiesen wird dazu auf die konkrete Offenbarung der Paragraphen 0066 bis 0076 in der EP 0 948 577 B1.

Die Auswahl von Emulgatoren für Bohrlochbehandlungssysteme und insbesondere von Bohrspülungen ist primär darauf gerichtet, solche Substanzen zu finden, die auch unter den extremen Bedingungen des praktischen Einsatzes zu einer maximalen Stabilität der Emulsion führen, d.h. es soll ein Viskositätsanstieg der Bohrspülmittel, insbesondere das Brechen der Emulsion unbedingt verhindert werden. Dies gilt insbesondere bei Emulsionen des Typs Wasser-in-Öl.

Es wurde nun gefunden, dass der Einsatz bestimmter derivatisierter Carbonsäuren die gestellte Aufgabe löst.

Gegenstand der vorliegenden Anmeldung ist daher die Verwendung von Ethercarbonsäuren der allgemeinen Formel (I)

RO(CH₂CH₂O)ₓ(CH₂CHR¹O)_{y}CH₂-COOX (I)

in der R für einen gesättigten oder ungesättigten, verzweigten oder unverzweigten Alkyl- bzw. Alkenylrest mit 6 bis 22 C-Atomen steht, x für eine Zahl von 1 bis 20 und y für Null oder eine Zahl von 1 bis 20 steht, mit der Maßgabe, dass die Summe aus x und y minimal 1 und maximal 25 beträgt, und R¹ einen Alkylrest mit 1 bis 4 C-Atomen bedeutet und X für ein Wasserstoffatom oder ein ein- oder mehrwertiges Anion steht, in Bohrspülmitteln.

Ethercarbonsäuren als solche sind der Fachwelt seit langem bekannt. Ihre Herstellung wird beispielsweise in der EP 1 061 064 A1 beschrieben, wobei hier ein Fettalkohol in ein Alkoholat überführt, anschließend mit Alkylenoxiden umgesetzt und im alkalischen Milieu mit Chloressigsäurederivaten zum Endprodukt alkyliert wird.

Die Ethercarbonsäuren im Sinne der vorliegenden technischen Lehre können sowohl ethoxyliert als auch propoxyliert sein, wobei es ebenfalls vorteilhaft sein kann, sowohl Ethylenoxid als auch Propylenoxidgruppen im Molekül zu haben. Die Reihenfolge bzw. Abfolge der Gruppen ist nicht erfindungswesentlich. Es ist also möglich, sowohl Verbindungen der Formel (I) einzusetzen, die Ethylenoxidgruppen und Propylenoxidgruppen in separierten Blöcken enthalten als auch solche Produkte gemäß Formel (I), bei denen Ethylen und Propylenoxidgruppen zufällig verteilt sind (sogenannte Randomalkoxylate).

Es ist allerdings bevorzugt, solche Ethercarbonsäuren gemäß Formel (I) einzusetzen, die frei von Propylenoxidgruppen sind. Bevorzugt sind also Ethercarbonsäuren gemäß Formel (I), in denen der Index y für 0 steht. Dabei ist es des weiteren bevorzugt, dass es solche Ethercarbonsäuren gemäß Formel (I) als Emulgatoren eingesetzt werden, welche einen Alkoxylierungsgrad x von 1 bis 15, vorzugsweise von 1 bis 10 und insbesondere von 1 bis 8 aufweisen. Die Auswahl der Alkylreste ist dahingehend vorteilhaft vorzunehmen, dass insbesondere geradkettige ungesättigte Verbindungen zu besonders vorteilhaften Ausführungsformen führen. Die Ethercarbonsäuren der allgemeinen Formel (I) können als freie Säuren oder als Salze in Gegenwart von ein- oder mehrwertigen Kationen vorliegen. Besonders bevorzugte Kationen im Sinne der vorliegenden Erfindung sind dabei das Ammoniumkation sowie die Alkali- bzw. Erdallcalikationen. Es ist weiterhin bevorzugt, die Ethercarbonsäuren der Formel (I) in form ihrer Salze einzusetzen.

Die Ethercarbonsäuren gemäß der allgemeinen Formel . (I) werden vorzugsweise als Emulgatoren in Bohrspülungen eingesetzt, wobei die Bohrspülung mind. eine wässrige und eine nicht-wässrige Phase enthalten muss. Dabei ist es besonders bevorzugt, die Ethercarbonsäuren gemäß Formel (I) als Emulgatoren in Bohrspülmitteln einzusetzen, die eine Wasser-in-Öl oder eine Öl-in-Wasser Emulsion ausbilden. Ganz besonders bevorzugt ist der Einsatz der Ethercarbonsäuren gemäß Formel (I) für sogenannte Invert-Bohrspülungen, bei denen in einer kontinuierlichen Ölphase dispers eine Wasserphase emulgiert ist.
Es kann vorteilhaft sei, die Ethercarbonsäuren im Sinne der vorliegenden Erfindung in derartigen Bohrspülsystemen einzusetzen, wobei die Ölphase der Bohrspülungen ausgewählt ist aus Estern von gesättigten oder ungesättigten, verzweigten oder unverzweigten Monocarbonsäuren mit 1 bis 24 C-Atomen und einwertigen linearen oder verzweigten, gesättigten oder ungesättigten Alkoholen mit 1 bis 24 C-Atomen. Weiterhin bevorzugt ist der Einsatz in solchen Bohrspülmitteln, deren Ölphase lineare alpha-Olefine, interne Olefine oder Paraffine enthält. Es kann auch vorteilhaft sein, derartige Ölphasen einzusetzen, die aus Mischungen der oben als bevorzugt beschriebenen Carrierfluids stehen.

Die Ethercarbonsäuren im Sinne der vorliegenden Erfindung sollten vorzugsweise in Mengen von mindesten 0,05 Gew.-%, bezogen auf das Gesamtgewicht der Spülung. Bevorzugt ist eine Menge von 0,1 bis maximal 25 Gew.-%, vorzugsweise aber 0,1 bis 10 Gew.-% und insbesondere von 0,1 bis 5 Gew.-% bezogen auf das Gewicht der gesamten Bohrspülung eingesetzt werden, um ihre erfindungsgemäße Wirkung optimal erfüllen zu können. Dabei ist der Bereich von 0,1 bis 1,0 Gew.-% ganz besonders bevorzugt. Bezogen auf das Gewicht der Ölphase alleine sollten vorzugsweise 1 bis 15 Gew.-% der Verbindungen der Formel (I) Verwendung finden, wobei der Bereich von 1 bis 10 Gew.-% hierbei besonders bevorzugt ein kann.

Der Einsatz der erfindungsgemäßen Ethercarbonsäuren führt zu einer Verbesserung der elektrischen Stabilität der emulgierten Systeme, insbesondere in Gegenwart von Seewasser. Auch die Filtrateigenschaften derartiger Bohrspülungen verbessern sich deutlich durch Zusatz der erfindungsgemäßen Ethercarbonsäuren. Ein weiterer positiver Effekt bei der Verwendung der Ethercarbonsäuren in Bohrspülmitteln ist darin zu sehen, dass die Bohrspülmittel auch bei der Kontaminierung noch ihre rheologischen Eigenschaften aufrechterhalten und es beispielsweise nicht zu einem nachteiligen Anstieg des Yield-Points kommt. Auch hier zeigt sich der positive Effekt, insbesondere bei mit Feststoffen und/oder Seewasser kontaminierten Invert-Bohrspülsystemen.

Ein weiterer Gegenstand der vorliegenden Erfindung betrifft im Temperaturbereich von 5 bis 20°C fließ- und pumpfähige Bohrlochbehandlungsmittel, insbesondere Bohrspülungen, entweder auf Basis einer geschlossenen Ölphase, gewünschtenfalls in Abmischung mit einer beschränkten Menge einer dispersen wässrigen Phase (W/O-Invert-Typ) oder auf Basis einer O/W-Emulsion mit disperser Ölphase in der geschlossenen wässrigen Phase, gewünschtenfalls enthaltend gelöste und/oder dispergierte übliche Hilfsstoffe wie Viskositätsbildner, Emulgatoren, Fluid-loss-Additive, Netzmittel, feinteilige Beschwerungsstoffe, Salze, Alkalireserven und/oder Biozide, wobei sie in ihrer Ölphase Verbindungen enthalten, ausgewählt aus den Klassen
(a) Carbonsäureestern der Formel (II)

   R'-COO-R" (II)

   wobei R' für einen gesättigten oder ungesättigten, linearen oder verzweigten Alkylrest mit 5 bis 23 C-Atomen steht und R" einen Alkylrest mit 1 bis 22 C-Atomen bedeutet, wobei der Rest R" gesättigt oder ungesättigt, linear oder verzweigt sein kann,
(b) linearen oder verzweigte Olefinen mit 8 bis 30 C-Atomen,
(c) wasserunlöslichen symmetrischen oder unsymmetrischen Ether aus einwertigen Alkoholen natürlichen oder synthetischen Ursprungs, wobei die Alkohole 1 bis 24 C-Atome enthalten können,
(d) wasserunlöslichen Alkohole der Formel (III)

   R"'-OH (III)

   wobei R'" für einen gesättigten, ungesättigten, linearen oder verzweigten Alkylrest mit 8 bis 24 C-Atomen steht,
(e) Kohlensäurediestern,
(f) Paraffine,
(g) Acetale
wobei diese Mittel Verbindungen der Formel (I) enthalten.
Diese Mittel enthalten, in der geschlossenen Ölphase die Öle der oben aufgeführten Gruppen allein oder in Abmischung untereinander.

Besonders bevorzugt als Ölphase sind die Carbonsäureester der Formel (II) und hier insbesondere solche, die in der europäischen Offenlegungsschrift EP 0 374 672 bzw. EP 0 386 636 beschrieben werden. Besonders bevorzugt ist im Rahmen der erfindungsgemäßen Lehre, die Verbindungen der Formel (I) in solchen Invert-Bohrspülemulsionen einzusetzen, deren Ölphase Ester der Formel (II) enthält, wobei der Rest R' in Formel (II) für einen Alkylrest mit 5 bis 21 C-Atomen steht, vorzugsweise für Alkylreste mit 5 bis 17 und insbesondere Alkylreste mit 11 bis 17 C-Atomen. Besonders geeignete Alkohole in derartigen Estern basieren auf verzweigten oder unverzweigten Alkoholen mit 1 bis 8 C Atomen; z.B. auf Methanol, Isopropanol, Isobutanol, oder 2-Ethylhexanol. Weiterhin bevorzugt sind Alkohole mit 12 bis 18 C-Atomen. Besonders bevorzugte Ester sind gesättigte C12-C14-Fettsäureester bzw. ungesättigte C16-C18-Fettsäuren, jeweils mit Isopropyl-, Isobutyl- oder 2-Ethylhexanol als Alkoholkomponente. Weiterhin geeignet ist das 2-Ethylhyloctanoat. Weitere geeignete Ester sind Essigsäureester, hier besonders Acetate von C8-C18-Fettalkoholen.
Derartige Ölphasen, üblicherweise als Carrierfluids bezeichnet, sind beispielsweise aus älteren Schutzrechten der Anmelderin Cognis bekannt, wobei hier insbesondere auf die europäischen Patentanmeldungen 0 374 671, 0 374,672, 0 382 070, 0 386 638 verwiesen wird. Auch Ölphasen auf Basis linearer Olefme sind dem Fachmann bekannt, hier sei die europäische Offenlegungsschrift 0 765 368 erwähnt.
Auch verzweigte Ester vom Typ (a), wie sie beispielsweise in der WO 99/33932 (Chevron) oder in der EP 0 642 561 (Exxon) offenbart werden, sind geeignete Carrierfluids im erfindungsgemäßen Verfahren. die dort offenbarten Ester sind Teil der Offenbarung der vorliegenden Erfindung. Weiterhin bevorzugt sind Abmischungen derartiger bevorzugter Ester untereinander.

Es ist auch bevorzugt, dass die Ölphase alpha-Olefine oder interne Olefine (IO) oder polyalpha-Olefine (PAO) im Sinne der Komponente (b) enthalten. Die in der erfindungsgemäßen Ölphase vorliegenden IO beziehungsweise IO-Gemische enthalten dann entsprechende Verbindungen mit 12 bis 30 C-Atomen im Molekül, vorzugsweise mit 14 bis 24 C-Atomen und insbesondere mit bis zu 20 C-Atomen im Molekül. Sofern alpha-Olefine als Ölphase enthalten sind, werden vorzugsweise alpha-Olefine auf Basis von Fettsäuren mit 12 bis 18 C-Atomen eingesetzt, wobei insbesondere gesättigte alpha-Olefine bevorzugt sind. Derartige bevorzugte Mischungen sind Gegenstand der EP 0 765 368 A1 der Anmelderin.

Weiterhin können geeignete Bestandteile der Ölphase wasserunlösliche symmetrische oder unsymmetrische Ether (c) aus einwertigen Alkoholen natürlichen oder synthetischen Ursprungs sein, wobei die Alkohole 1 bis 24 C-Atome enthalten können. Derartige Bohrspülsysteme sind Gegenstand der europäischen Anmeldung 0 472 557. Auch wasserlöslcihe Alkohole der Gruppe (d) können bevorzugte Bestandteile der Ölphase im Sinne der vorliegenden technischen Lehre sein. Weiterhin sind Kohlensäurediester (e) gemäß der europäischen Anmeldung 0 532 570 geeignete Bestandteile der Ölphase. Diese Verbindungen können sowohl die gesamte Ölphase ausmachen als auch Teile davon. Auch Paraffine (f) und/oder Acetale (g) können als Bestandteile der Ölphase eingesetzt werden.

Es sind beliebige Mischungen der Verbindung a) bis g) untereinander möglich. Die Ölphase der erfindungsgemäßen Emulsionen setzt sich vorzugsweise zu mind. 50 Gew.-% aus derartigen bevorzugten Verbindungen (a) bis (g) zusammen, insbesondere sind solche Systeme bevorzugt, bei denen die Ölphase zu 60 bis 80 % und insbesondere zu 100 Gew.-% aus Verbindungen (a) bis (g) oder Mischungen daraus bestehen.

Die Ölphasen selbst weisen dann vorzugsweise Flammpunkte oberhalb 85 °C und vorzugsweise oberhalb 100°C auf. Sie sind insbesondere als Invert-Bohrspülungen vom W/O-Typ ausgebildet und enthalten dabei vorzugsweise die disperse wässrige Phase in Mengen von etwa 5 von wasserbasierten O/W-Emulsionsspülungen die Menge der dispersen Ölphase im Bereich von etwa 1 bis 50 Gew.-% und vorzugsweise von etwa 8 bis 50 Gew.-% liegt. Die geschlossenen Ölphasen derartiger erfindungsgemäßen Spülungen weisen im Temperaturbereich von 0 bis 5°C eine Brookfield(RVT)-Viskosität unterhalb 50 mPas, vorzugsweise nicht über 40 mPas auf. Der pH-Wert der Spülungen ist vorzugsweise auf einen pH-Wert im Bereich von etwa neutral bis mäßig basisch, insbesondere auf den Bereich von etwa 7,5 bis 11 eingestellt, wobei der Einsatz von Kalk als Alkalireserve besonders bevorzugt sein kann.

Wasser ist ebenfalls ein Bestandteil der beschriebenen Bohrspülsysteme. Das Wasser wird vorzugsweise in Mengen von minimal etwa 0,5 Gew.-% in den Invert-Emulsionen vorhanden sein. Es ist aber bevorzugt, dass mindestens 5 bis 10 Gew.-% Wasser enthalten sind. Wasser in Bohrspülsystemen der hier beschriebenen Art enthält zum Ausgleich des osmotischen Gefälles zwischen der Bohrspülung und dem Formationswasser immer Anteile von Elektrolyten, wobei Calcium- und oder Natrium-Salze die bevorzugten Elektrolyte darstellen. Insbesondere CalCl₂ wird häufig verwendet. Aber auch andere Salze aus der Gruppe der Alkali- und/oder Erdalkali-Gruppe sind geeignet, beispielsweise Kaliumacetate und/oder Formiate.

Vorzugsweise werden die Ethercarbonsäuren der Formel (I) im Sinne der Erfindung als Emulgatoren in solchen Spülungssystemen eingesetzt, die, bezogen auf die gesamte Flüssigphase, 10 bis 30 Gew.-% Wasser und somit 90 bis 70 Gew.-% der Ölphase enthalten. Wegen des hohen Anteils an dispergierten Feststoffen in Invert-Bohrspülungen, wird hier nicht Bezug genommen auf das Gesamtgewicht der Spülung, also Wasser- Ol und Feststoffphase. Die Ethercarbonsäuren der Formel (I) sind öllöslich und befinden sich daher ganz überwiegend in der Ölphase und deren Grenzflächen zur Wasserphase.

Weitere bevorzugte Mischungsverhältnisse liegen bei 80 Gew.-% Ölphase und 20 Gew.-% Wasserphase. Die Bohrspülungen im Sinne der vorliegende technischen Lehre können noch weitere, übliche Hilfs- und Zusatzstoffe enthalten. Hier kommen insbesondere weitere Emulgatoren, Beschwerungsmittel, fluid-loss-Additive, Viskositätsbildner und Alkalireserven, insbesondere lime (= Ca(OH)₂) aber auch Biozide oder sogenannte wetting agents, welche die Benetzbarkeit von Oberflächen verbessern, in Betracht.

Für die Praxis brauchbare Emulgatoren sind Systeme, die zur Ausbildung der geforderten W/O-Emulsionen geeignet sind. In Betracht kommen insbesondere ausgewählte oleophile Fettsäuresalze, beispielsweise solche auf Basis von Amidoaminverbindungen. Emulgatoren der hier betroffenen Art werden im Handel als hoch- konzentrierte Wirkstoffaufbereitungen vertrieben und können beispielsweise in Mengen von etwa 2,5 bis 5 Gew.-%, insbesondere in Mengen von etwa 3 bis 4 Gew.-% - jeweils bezogen auf Ölphase - Verwendung finden.

Als fluid-loss-Additiv und damit insbesondere zur Ausbildung einer dichten Belegung der Bohrwandungen mit einem weitgehend flüssigkeitsundurchlässigen Film wird in der Praxis insbesondere hydrophobierter Lignit eingesetzt. Geeignete Mengen liegen beispielsweise im Bereich von etwa 5 bis 20 und vorzugsweise 5 bis 10 lb/bbl oder besonders bevorzugt im Bereich von etwa 5 bis 8 Gew.-% - bezogen auf die Ölphase.

In Bohrspülungen der hier betroffenen Art ist der üblicherweise eingesetzte Viskositätsbildner ein kationisch modifizierter feinteiliger Bentonit, der insbesondere in Mengen von etwa 8 bis 10 und vorzugsweise von 2 bis 5 lb/bbl oder im Bereich von 1 bis 4 Gew.-%, bezogen auf Ölphase, verwendet werden kann. Das in der einschlägigen Praxis üblicherweise eingesetzte Beschwerungsmittel zur Einstellung des erforderlichen Druckausgleiches ist Baryt (BaSO₄), dessen Zusatzmengen den jeweils zu erwartenden Bedingungen der Bohrung angepasst wird. Es ist beispielsweise möglich, durch Zusatz von Baryt das spezifische Gewicht der Bohrspülung auf Werte im Bereich bis etwa 2,5 und vorzugsweise im Bereich von etwa 1,3 bis 1,6 zu erhöhen. Ein anderes geeignetes Beschwerungsmittel ist Calciumcarbonat.

Es kann bevorzugt sein, neben den Ethercarbonsäuren der Formel (I) noch freie, gesättigte oder ungesättigte Fettsäuren der allgemeinenFormel R-COOH, in der R für Alkyl- oder Alkenylreste mit 5 bis 21 C-Atomen steht, mit zu verwenden. Dabei sollten diese Fettsäuren vorzugsweise in Mengen von mindesten 0,1, vorzugsweise 0,3 Gew.-% und vorteilhafterweise im Bereich von 0,5 bis 10 Gew.-%, bezogen auf das Gewicht der Spülung, eingesetzt werden. Ein besonders bevorzugter Bereich liegt bei 0,3 bis 2,0 Gew.-%. Bezogen auf das Gewicht der Ölphase sollten die freien Fettsäuren vorzugsweise in Mengen von 1,5 bis 6 Gew.-% eingesetzt werden. Es ist außerdem bevorzugt, dass die freien Fettsäuren in einem Mengenverhältnis von ca. 1 : 1, vorzugsweise 2 : 1 bis maximal 10 : 1 zu den Ethercarbonsäuren der Formel (I) eingesetzt werden.

Die Verwendung der erfindungsgemäßen Ethercarbonsäuren führt zum einen zu stabilen Emulsionen, zum anderen können auch die Filtratwerte der Spülungssysteme verbessert werden. Weiterhin wird die Rheologie der Spülung, auch bei niedrigen Temperaturen, wie beispielweise von 10 °C und kleiner, positiv beeinflusst. Es kann vorteilhaft sein, die Ethercarbonsäuren der vorliegenden Anmeldung als alleinige Emulgatoren in Invert-Bohrspülsystemen zu verwenden. Es ist aber auch möglich Mischungen der Ethercarbonsäuren mit anderen bekannten Emulgatoren einzusetzen. Bevorzugt sind hier solche Emulgatoren, die in der Lage sind W/O-Emulsionen auszubilden. Eine weitere vorteilhafte Eigenschaft der Verbindungen der Formel (I) ist darin zu sehen, dass deren Einsatz in Bohrspülungen, insbesondere in Invert-Systemen, auch bei den unterschiedlichsten Additivkombinationen oder Carrierfluids zu einer verbesserten, d.h. verringerten Viskosität führt, wobei dieser Verdünnungseffekt vorzugsweise dann auftritt wenn neben den Verbindungen der Formel (I) noch weitere, öllösliche Tenside, z.B. nichtionische Tenside auf Basis von Umsetzungsprodukten von Fettsäure-Epoxiden mit Ethylenoxid und/oder Propylenoxid, eingesetzt werden. In Kombination mit anderen Tensiden können die Verbindungen der Formel (I) aber auch eine Dispergatorwirkung entfalten, d.h. sie führen bei voll formulierten Spülungssystemen zu einer besseren Verteilung der Feststoffe, insbesondere bei niedrigen Temperaturen.

### Beispiele

### Beispiel 1

Zum Test der vorliegenden technischen Lehre wurden Bohrspülmittel mit der folgenden allgemeinen Zusammensetzung hergestellt:

| | |
|---|---|
| Ölphase¹⁾ | 173 ml |
| Wasser | 77 ml |
| Viskositätsbildner²⁾ | 2 g |
| Emulgator³⁾ | 8 g |
| Ca(OH)₂ | 2 g |
| Fluid loss Additive⁴⁾ | 7 g |
| Bariumsulfat | 327 g |
| CaCl₂ * 2 H₂O | 27 g |
| Öl/Wasser-Verhältnis | 70/30 (v/v) |
| Dichte: | 14 lb/gal (1,7 g/l) |

| | |
|---|---|
| 1) C₁₆-C_{18/}-alpha-Olefin, isomerisiert, Fa. Chevron; Dichte bei 20 °C: 0,785 g/cm³, Brookfield(RVT)-Viskosität bei 20 °C 5,5 mPas 2) modifizierter organophiler Bentonit, Geltone II, Fa. Baroid 3) Aminoamid 4) modifizierter Braunkohlestaub, Duratone HT, Fa. Baroid | |

Die Bestandteile wurden in einem Hamilton-Mixer in der folgenden Reihenfolge vermischt: Ölphase, Wasser, Viskositätsbildner, Emulgator, Lime, fluid-loss additiv, Bariumsulfat, dann das Calziumchlorid und optional das kontaminierende Mittel (Rev dust). Anschließend wurde ggf. das erfindungsgemäßen Additiv zugesetzt, eine gesättigte C₁₂-C₁₈-Ethercarbonsäure gemäß Formel (I), in der x für 2 bis 5 steht y ist Null, und dann die rheologischen Kenndaten Plastische Viskosität (PV), Fließgrenze (Yield point YP) sowie die Gelstärke (Gels 10"/') nach 10 Sekunden und 10 Minuten der Spülungen mit einem Fann-SR12 Rheometer (Fa. Fann) bestimmt. Weiterhin wurde die elektrische Stabilität gemessen.
Anschließend wurde die Bohrspülung einer Testung in einem Roller Oven (Fa. Baroid) bei Temperaturen von 121 °C (250 °F) für 16 h unterzogen. (After Hot Rolling = AHR in der Tabelle bzw. Before Hot Rolling = BHR).

In Tabelle 1 sind die Ergebnisse aufgeführt, wobei eine Invert-Bohrspülung mit (B) und ohne (A) das erfindungsgemäße Additiv untersucht wurden. Das Additiv im Sinne der vorliegenden Erfindung wurde in Mengen von 1 g der obigen Rahmenrezeptur zugesetzt, wobei der Gehalt an Standardemulgator gleichzeitig auf 7 g reduziert wurde.
Zur Umrechnung der im hier betroffenen technischen Fachgebiet üblichen Messzahlen in SIkonforme Einheiten gelten die folgenden Umrechnungsfaktoren: I lb = 0,454 kg; 1 bbl = 0,156 m³; 1 lb/bbl = 2,85 kg/m³; 1 lb/100 ft² = 0, 4788 Pa; cP = 10⁻³ m/kg s

**Tabelle 1:**

| **System No.:** | | **A** | | **B** | |
|---|---|---|---|---|---|
| | | **BHR** | **AHR** | **BHR** | **AHR** |
| Hours rolled/aged | h | | 16 | | 16 |
| Hot roll temp. | °F | | 250 | | 250 |
| Static age temp. | °F | | - | | - |
| Electrical stab. | V | 190 | 210 | 350 | 240 |
| **PV** | cP | 29 | 27 | 28 | 26 |
| **YP** | Ib/100 ft² | 21 | 18 | 12 | 6 |
| **Gels 10"/10'** | Ib/100 ft² | 10/11 | 7/8 | 7/8 | 6/7 |

Man erkennt, dass der Zusatz an Ethercarbonsäuren der Formel (I) zu einer deutlichen Verbesserung der elektrischen Stabilität bei gleichzeitiger Verringerung der Viskosität führt

### Beispiel 2

In einem weiteren Test wurden die Invertbohrspülungen wie im Beispiel 1 hergestellt und deren rheologischen Eigenschaften getestet. Allerdings wurde jetzt noch Filterasche, so genannter "Rev dust" als Verunreinigung in Mengen von jeweils 35 g zugesetzt, um das Verhalten der Spülung bei Kontamination durch erhöhten Feststoffgehalt zu testen. Die Spülung A enthielt 8 g des Standardemulgators, die Spülung B enthielt stattdessen 8 g der erfindungsgemäßen Ethercarbonsäure wie im Beispiel 2. Die Ergebnisse sind in der Tabelle 2 zu finden:

**Tabelle 2:**

| System No.: | | A | | B | |
|---|---|---|---|---|---|
| | | | **AHR** | | **AHR** |
| Hours rolled/aged | h | | 16 | | 16 |
| Hot roll temp. | °F | | 250 | | 250 |
| Static age temp. | °F | | - | | - |
| **PV** | cP | | 49 | | 49 |
| **YP** | lb/100 ft² | | 34 | | 6 |
| **Gels 10"/10'** | lb/100 ft² | | 13/27 | | 3/3 |

### Beispiel 3

Es wurden Invertbohrspülungen wie im Beispiel 1 hergestellt und getestet. Allerdings enthielt die Spülung (A) 8 g des Standardemulgators während die Spülung (B) 2 g des erfindungsgemäßen Ethercarbonsäure enthielt und nur 4 g des Standardemulgators. Als Ölphase wurde eine Mischung aus dem alpha-Olefin wie im Beispiel 1 beschrieben und einem Fettsäureester auf Basis von C₈-C₁₈-Fettsäuren mit 2-Ethylhexanol verwendet.

Neben den rheologischen Kenndaten wurden hier auch die Filtratwerte mit einem Fann High Temperature - High Pressure Modell HTHP ermittelt, die Ergebnisse sind in der Tabelle 3 aufgeführt:

**Tabelle 3:**

| System No.: | | A | | B | |
|---|---|---|---|---|---|
| | | **BHR** | **AHR** | **BHR** | **AHR** |
| Hours rolled/aged | h | | 16 | | 16 |
| Hot roll temp. | °F | | 250 | | 250 |
| Static age temp. | °F | | - | | - |
| **PV** | cP | 34 | 34 | 35 | 29 |
| **YP** | lb/100 ft² | 63 | 45 | 29 | 9 |
| **Gels 10"/10'** | lb/100 ft² | 28/32 | 20/24 | 11/13 | 5/6 |
| HTHP total | ml | | 3,2 | | 2,4 |
| HTHP water | ml | | - | | - |
| HTHP oil | ml | | 3,2 | | 2,4 |
| HTHP temp. | °F | | 250 | | 250 |

### Beispiel 4:

Es wurden drei Invertbohrspülungen wie im Beispiel 1 hergestellt und getestet. Das System (A) enthielt 8 g des Standardemulgators, das System (B) enthielt statt dessen 2 g der erfindungsgemäßen Ethercarbonsäure mit 2 Mol Ethylenoxid pro Mol Säure sowie 4 Mol einer ungesättigten Fettsäure (Rübölfettsäure, erucaarm, OMC 392, Fa. Cognis), die Spülung (C) enthielt an Stelle des Standardemulgators 3 g Ethercarbonsäure und 5 g ungesättigter Fettsäure OMC 392. Die Ergebnisse der Messung sind in Tabelle 4 zu finden: ,

**Tabelle 4:**

| System No.: | | A | | B | | C | |
|---|---|---|---|---|---|---|---|
| | | **BHR** | **AHR** | **BHR** | **AHR** | | |
| Hours rolled/aged | h | | 16 | | 16 | | 16 |
| Hot roll temp. | °F | | 250 | | 250 | | 250 |
| Static age temp. | °F | | - | | - | | - |
| **PV** | cP | 29 | 27 | 32 | 25 | 31 | 27 |
| **YP** | lb/100 ft² | 21 | 18 | 16 | 10 | 11 | 2 |
| **Gels 10"/10'** | lb/100 ft² | 10/11 | 7/8 | 10/13 | 7/7 | 6/7 | 3/4 |

### Beispiel 5

Es wurde eine Spülung wie im Beispiel 1 hergestellt. Die erfindungsgemäße Spülung B enthielt 6 g eines Umsetzungsprodukts aus einem C₁₂-C₁₆-Epoxid mit Ethylenglykol (Epicol G 246, Cognis) und 2 g der erfindungsgemäßen Ethercarbonsäure. In der Vergleichspülung A wurden wieder 8 g des Standardemulgators verwendet. Die Spülungen wurden jeweils bei 150 °F gealtert. Die Ergebnisse der Messung sind in Tabelle 5 zu finden:

**Tabelle 5:**

| System No.: | | A | | B | |
|---|---|---|---|---|---|
| | | **BHR** | **AHR** | **BHR** | **AHR** |
| Hours rolled/aged | h | | 16 | | 16 |
| Hot roll temp. | °F | | 150 | | 150 |
| Static age temp. | °F | | - | | - |
| Electrical stab. | V | 450 | 320 | 700 | 400 |
| **PV** | cP | 25 | 23 | 26 | 25 |
| **YP** | lb/100 ft² | 18 | 17 | 17 | 9 |
| **Gels 10"/10'** | lb/100 ft² | 7/9 | 7/9 | 6/8 | 5/6 |

Die erfindungsgemäße Spülung B zeigt eine höhere elektrische Stabilität gegenüber der Vergleichspülung.

### Beispiel 6:

Es wurden drei Invert-Spülungen auf Basis eine Praffinöls als Ölphase hergestellt. Als zusätzlicher Feststoff wurde jeweils die Filterasche (Rev Dust) zugesetzt. Die Spülungen wurden bei 65 °C für 16 h wie oben beschrieben gealtert. Das Öl/Wasser-Verhältnis war 80 : 20. Die rheologischen Kenndaten wurden bei 8 °C gemessen. Die Ergebnisse der Tabelle 6 zeigen, dass auch unter diesen Bedingungen der Zusatz der Verbindungen der Formel (I) die Rheologie der Spülungen positiv beeinflusst.

**Tabelle 6:**

| **Paraffinöl** | **g** | **164,4** | **164,4** | **164,4** |
|---|---|---|---|---|
| **Ethercarbonsäure 2 EO** | g | # | 0,8 | 1,1 |
| Wasser | g | 51,1 | 51,1 | 51,1 |
| CaC12 * 2H2O | g | 23,6 | 23,6 | 23,6 |
| Viskositätsbildner ¹⁾ | g | 2,1 | 2,1 | 2,1 |
| Lime | g | 4,21 | 4,21 | 4,21 |
| Primäremulgator²⁾ | g | 4,21 | 4,21 | 4,21 |
| Fettsäuremischung³⁾ | g | 1,05 | 1,05 | 1,05 |
| Fluid Loss Reducer ⁴⁾ | g | 4,91 | 4,91 | 4,91 |
| Bariumsulfat | g | 342,1 | 342,1 | 342,1 |
| **Rev Dust** | **g** | **45** | **45** | **45** |

| System No.: | | A | B | C |
|---|---|---|---|---|
| | | **AHR** | **AHR** | **AHR** |
| **PV** | cP | 125 | 122 | 120 |
| **YP** | lb/100 ft² | 26 | 22 | 20 |
| **Gels 10"/10'** | lb/100 ft² | 10/17 | 5/8 | 4/7 |

| | | | | |
|---|---|---|---|---|
| Paraffinöl: d (20°C) = 0,835g/cm³, V (20°C) = 6,2 mm²s/s ¹⁾ 73%Ölsäure; 8% Linolsäure und 19% ungesättigte Fettsäuren ²⁾ Aminoamid ³⁾ modifizierter organophiler Bentonit, Geltone II, Fa. Baroid ⁴⁾ Braunkohlestaub | | | | |

## Patentansprüche

1. Verwendung von Ethercarbonsäuren der allgemeinen Formel (I)
RO(CH₂CH₂O)ₓ(CH₂CHR¹O)_{y}CH₂-COOX (I)
in der R für einen gesättigten oder ungesättigten, verzweigten oder unverzweigten Alkyl- bzw. Alkenylrest mit 6 bis 22 C-Atomen steht, x für eine Zahl von 1 bis 20 und y für Null oder eine Zahl von 1 bis 20 steht, mit der Maßgabe, dass die Summe aus x und y minimal 1 und maximal 25 beträgt, und R¹ einen Alkylrest mit 1 bis 4 C-Atomen bedeutet und X für ein Wasserstoffatom oder ein ein- oder mehrwertiges Kation steht, in Bohrspülmitteln.

2. Verwendung nach Anspruch 1, **dadurch gekennzeichnet, dass** die Ethercarbonsäuren der Formel (1) als Emulgatoren in Bohrspülungen eingesetzt werden, die mindestens eine wässerige und ein nicht-wässerige Phase enthalten.

3. Verwendung nach den Ansprüchen 1 bis 2, **dadurch gekennzeichnet, dass** die Ethercarbonsäuren als Emulgatoren in Bohrspülmitteln verwendet werden, die eine Wasser-in-Öl oder eine Öl-in-Wasser Emulsion bilden.

4. Verwendung nach den Ansprüchen 1 bis 3, **dadurch gekennzeichnet, dass** die Ethercarbonsäuren in wässerigen Emulsionsbohrspülsystemen verwendet werden, die als Ölphase Ester aus gesättigten oder ungesättigten, verzweigten oder unverzweigten Monocarbonsäuren mit 1 bis 24 C-Atomen mit einwertigen linearen oder verzweigten, gesättigten oder ungesättigten Alkoholen mit 1 bis 24 C-Atomen enthalten.

5. Verwendung nach den Ansprüchen 1 bis 4, **dadurch gekennzeichnet, dass**, die Ethercarbonsäuren in wässerigen Emulsionsbohrspülsystemen verwendet werden, die als Ölphase lineare alpha-Olefine, interne Olefine und/oder Paraffine enthalten.

6. Verwendung nach den Ansprüchen 1 bis 5, **dadurch gekennzeichnet, dass** solche Ethercarbonsäuren der Formel (I) eingesetzt werden, wobei in der Formel (I) y Null bedeutet.

7. Verwendung nach den Ansprüchen 1 bis 6, **dadurch gekennzeichnet, dass** solche Ethercarbonsäuren der Formel (I) eingesetzt werden, wobei in der Formel (I) x eine Zahl von 1 bis 15, vorzugsweise 1 bis 10 und insbesondere 1 bis 8 bedeutet.

8. Verwendung der Ethercarbonsäuren der Formel (I) gemäß den Ansprüchen 1 bis 7, **dadurch gekennzeichnet, dass** die Ethercarbonsäuren in Mengen von 0,1 bis 25 Gew.-%, vorzugsweise 0,1 bis 10 Gew.-% und insbesondere von 0,1 bis 5 Gew.%, jeweils bezogen auf das Gewicht der Bohrspülung, eingesetzt werden.

9. Verwendung nach den Ansprüchen 1 bis 8, **dadurch gekennzeichnet, dass** neben den Ethercarbonsäuren der Formel (I) noch freie Fettsäuren verwendet werden.

10. Bohrlochbehandlungsmittel, welches im Temperaturbereich von 5 bis 20°C fließ- und pumpfähige ist, auf Basis einer geschlossenen Ölphase in Abmischung mit einer beschränkten Menge einer dispersen wässrigen Phase (W/O-Invert-Typ), enthaltend optional gelöste und/oder dispergierte übliche Hilfsstoffe wie Viskositätsbildner, Fluid-loss-Additive, Netzmittel, feinteilige Beschwerungsstoffe, Salze, Alkalireserven und/oder Biozide, **dadurch gekennzeichnet, dass** das Mittel Verbindungen gemäß Formel (I) im Anspruch 1 enthalten.

11. Bohrlochbehandlungsmittel nach Anspruch 10, **dadurch gekennzeichnet, dass** die Ölphase ausgewählt ist aus den Klassen
(a) Carbonsäureestern der Formel (II)
R'-COO-R" (II)
wobei R' für einen gesättigten oder ungesättigten, linearen oder verzweigten Alkylrest mit 5 bis 23 C-Atomen steht und R" einen Alkylrest mit 1 bis 22 C-Atomen bedeutet, wobei der Rest R" gesättigt oder ungesättigt, linear oder verzweigt sein kann,
(b) linearen oder verzweigte Olefinen mit 8 bis 30 C-Atomen,
(c) wasserunlöslichen symmetrischen oder unsymmetrischen Ether aus einwertigen Alkoholen natürlichen oder synthetischen Ursprungs, wobei die Alkohole 1 bis 24 C-Atome enthalten können,
(d) wasserunlöslichen Alkohole der Formel (III)
R"'-OH (III)
wobei R"' für einen gesättigten, ungesättigten, linearen oder verzweigten Alkylrest mit 8 bis 24 C-Atomen steht,
(e) Kohlensäurediestem
(f) Paraffine,
(g) Acetale

## Claims

1. The use of ether carboxylic acids corresponding to general formula (I):
RO(CH₂CH₂O)ₓ(CH₂CHR¹O)_{y}CH₂-COOX (I)
in which R is a saturated or unsaturated, branched or unbranched alkyl or alkenyl group containing 6 to 22 carbon atoms, x is a number from 1 to 20 and y is 0 or a number from 1 to 20, providing that the sum of x and y is at least 1 and at most 25, and R¹ is an alkyl group containing 1 to 4 carbon atoms and X is a hydrogen atom or a monovalent or polyvalent anion, in drilling fluids.

2. The use claimed in claim 1, **characterized in that** the ether carboxylic acids of formula (I) are used as emulsifiers in drilling fluids which contain at least one aqueous phase and one nonaqueous phase.

3. The use claimed in claims 1 and/or 2, **characterized in that** the ether carboxylic acids are used as emulsifiers in drilling fluids which form a water-in-oil or oil-in-water emulsion.

4. The use claimed in claims 1 to 3, **characterized in that** the ether carboxylic acids are used in water-based emulsion drilling fluid systems which contain esters of saturated or unsaturated, branched or unbranched monocarboxylic acids containing 1 to 24 carbon atoms with monohydric, linear or branched, saturated or unsaturated alcohols containing 1 to 24 carbon atoms, as the oil phase.

5. The use claimed in claims 1 to 4, **characterized in that** the ether carboxylic acids are used in water-based emulsion drilling fluid systems which contain linear α-olefins, internal olefins and/or paraffins as the oil phase.

6. The use claimed in claims 1 to 5, **characterized in that** ether carboxylic acids of formula (I), in which y represents 0, are used.

7. The use claimed in claims 1 to 6, **characterized in that** ether carboxylic acids corresponding to formula (I), in which x is a number from 1 to 15, preferably 1 to 10 and more particularly 1 to 8, are used.

8. The use of ether carboxylic acids claimed in claims 1 to 7, **characterized in that** the ether carboxylic acids are used in quantities of 0.1 to 25% by weight, preferably 0.1 to 10% by weight and more particularly 0.1 to 5% by weight, based on the weight of the drilling fluid.

9. The use claimed in claims 1 to 8, **characterized in that** free fatty acids are used in addition to the ether carboxylic acids of formula (I).

10. A well servicing composition flowable and pumpable at 5 to 20°C which is based on a continuous oil phase in admixture with a limited quantity of a disperse aqueous phase (w/o invert type) and contains optionally dissolved and/or dispersed standard auxiliaries, such as thickeners, fluid loss additives, wetting agents, fine-particle weighting agents, salts, alkali reserves and/or biocides, **characterized in that** it contains the compounds corresponding to formula (I) in claim 1.

11. A well servicing composition as claimed in claim 10, **characterized in that** the oil phase is selected from the classes of
(a) carboxylic acid esters corresponding to formula (II):
R'-COO-R" (II)
where R' is a saturated or unsaturated, linear or branched alkyl group containing 5 to 23 carbon atoms and R" is an alkyl group containing 1 to 22 carbon atoms, which may be saturated or unsaturated, linear or branched,
(b) linear or branched olefins containing 8 to 30 carbon atoms,
(c) water-insoluble, symmetrical or nonsymmetrical ethers of monohydric alcohols of natural or synthetic origin which may contain 1 to 24 carbon atoms,
(d) water-insoluble alcohols corresponding to formula (III):
R"'-OH (III)
where R"' is a saturated, unsaturated, linear or branched alkyl group containing 8 to 24 carbon atoms,
(e) carbonic acid diesters,
(f) paraffins,
(g) acetals.

## Revendications

1. Utilisation dans des fluides de lavage de trous de soudage, d'acides carboxyliques éthérifiés de formule générale (I) :
RO(CH₂CH₂O)ₓ(CH₂CHR¹O)_{y}CH₂-COOX (I)
dans laquelle R représente un radical alkyle ou alcényle saturé ou insaturé, linéaire ou ramifié comportant 6 à 22 atomes de carbone, x représente un nombre de 1 à 20 et y désigne 0 ou un nombre de 1 à 20, étant précisé que la somme de x et de y est au minimum 1 et au maximum 25 et R¹ représente un radical alkyle comportant 1 à 4 atomes de carbone et X représente un atome d'hydrogène ou un cation monovalent ou polyvalent.

2. Utilisation selon la revendication 1,
**caractérisée en ce que**
les acides carboxyliques éthérifiés de formule (I) sont employés comme émulsifiants dans des fluides de lavage de trous de soudage qui contiennent au moins une phase aqueuse et une phase non aqueuse.

3. Utilisation selon les revendications 1 à 2,
**caractérisée en ce que**
les acides carboxyliques éthérifiés sont utilisés comme émulsifiants dans des fluides de lavage de trous de soudage qui forment une émulsion eau dans l'huile ou une émulsion huile dans l'eau.

4. Utilisation selon les revendications 1 à 3,
**caractérisée en ce que**
les acides carboxyliques éthérifiés sont utilisés dans des systèmes de lavage de trous de soudage sous forme d'émulsion aqueuse, qui contiennent en tant que phase huileuse des esters d'acides monocarboxyliques saturés ou insaturés, linéaires ou ramifiés comportant 1 à 24 atomes de carbone d'alcools monovalents linéaires ou ramifiés, saturés ou insaturés comportant 1 à 24 atomes de carbone.

5. Utilisation selon les revendications 1 à 4,
**caractérisée en ce que**
les acides carboxyliques éthérifiés sont utilisés dans des systèmes de lavage de trous de soudage sous forme d'émulsion aqueuse qui contiennent en tant que phase huileuse des alpha-oléfines linéaires, des oléfines internes et/ou des paraffines.

6. Utilisation selon les revendications 1 à 5,
**caractérisée en ce qu'**
on utilise des acides carboxyliques éthérifiés de formule (I) dans lesquels y est égal à 0.

7. Utilisation selon les revendications 1 à 6,
**caractérisée en ce que**
on utilise des acides carboxyliques éthérifiés de formule (I) dans lesquels, x désigne un nombre de 1 à 15, de préférence de 1 à 10 et en particulier de 1 à 8.

8. Utilisation des acides carboxyliques éthérifiés de formule (I) selon les revendications 1 à 7,
**caractérisée en ce que**
les acides carboxyliques éthérifiés sont utilisés en quantités de 0,1 à 25 % en poids, de préférence de 0,1 à 10 % en poids et en particulier de 0,1 à 5 % en poids respectivement en fonction du poids du fluide de lavage de trous de soudage.

9. Utilisation selon les revendications 1 à 8,
**caractérisée en ce que**
outre les acides carboxyliques éthérifiés de formule (I), on utilise des acides gras libres.

10. Agent de traitement de trous de soudage, fluide et apte au pompage, dans la plage de températures de 5 à 20 °C à base d'une phase huileuse fermée mélangée à une quantité limitée d'une phase aqueuse dispersée (du type E/H inverse), contenant des auxiliaires habituels le cas échéant dissous et/ou dispersés tels que des agents renforçateurs de viscosité, des additifs empêchant les pertes de fluide, des agents de réticulation, des charges fines, des sels, des réserves alcalines et/ou des biocides,
**caractérisé en ce que**
l'agent de traitement contient des composés selon la formule (I) de la revendication 1.

11. Agent de traitement de trous de soudage selon la revendication 10,
**caractérisé en ce que**
la phase huileuse est choisie dans les classes :
(a) des esters d'acides carboxyliques de formule (II)
R'-COO-R" (II)
dans laquelle R' représente un radical alkyle saturé ou insaturé, linéaire ou ramifié comportant 5 à 23 atomes de carbone et R" représente un radical alkyle comportant 1 à 22 atomes de carbone, le radical R" pouvant être saturé ou insaturé, linéaire ou ramifié,
(b) des oléfines linéaires ou ramifiées comportant 8 à 30 atomes de carbone,
(c) des éthers symétriques ou asymétriques insolubles dans l'eau d'alcools monovalents d'origine naturelle ou synthétique, ces alcools pouvant contenir 1 à 24 atomes de carbone,
(d) des alcools insolubles dans l'eau de formule (III)
R"'-OH (III)
dans laquelle R"' désigne un radical alkyle saturé, insaturé, linéaire ou ramifié comportant 8 à 24 atomes de carbone,
(e) des diesters d'acide carbonique,
(f) des paraffines,
(g) des acétals.
